Europäisches Patentamt

European Patent Office

Office européen des brevets

(19)

(11) Veröffentlichungsnummer: **0 173 113
B1**

(12) **EUROPÄISCHE PATENTSCHRIFT**

(45) Veröffentlichungstag der Patentschrift:
**17.11.88**

(21) Anmeldenummer: **85109755.0**

(22) Anmeldetag: **02.08.85**

(51) Int. Cl.⁴: **B 60 R 1/06**

(54) **Aussenspiegel für Kraftfahrzeuge.**

(30) Priorität: **11.08.84 DE 3429713**

(43) Veröffentlichungstag der Anmeldung:
**05.03.86 Patentblatt 86/10**

(45) Bekanntmachung des Hinweises auf die Patenterteilung:
**17.11.88 Patentblatt 88/46**

(84) Benannte Vertragsstaaten:
**AT BE CH DE FR GB IT LI LU NL SE**

(56) Entgegenhaltungen:
**DE - A - 2 000 842
DE - U - 7 835 006
DE - U - 8 228 264
FR - A - 2 153 536
FR - A - 2 418 887
GB - A - 2 041 857**

(73) Patentinhaber: **HOHE KG, Hauptstrasse 36,
D-6981 Collenberg (DE)**

(72) Erfinder: **Polzer, Herwig, Philipp-Larenz-Strasse 36,
D-6982 Freudenberg (DE)**
Erfinder: **Seubert, Richard, Meister-Hermann-Strasse 8,
D-8760 Miltenberg (DE)**

(74) Vertreter: **Zinngrebe, Horst, Dr.rer.nat.,
Saalbaustrasse 11, D-6100 Darmstadt (DE)**

## Beschreibung

Die Erfindung betrifft einen Aussenspiegel für Kraftfahrzeuge mit einem an einem Spiegelfuss schwenkbar befestigten Spiegelgehäuse, mit zwei flächig aufeinander liegenden, mit fluchtenden Durchgangsbohrungen versehenen Lagerteilen, wobei sich durch die Durchgangsbohrungen ein axial federbelastetes Verbindungsteil erstreckt, welches die Lagerteile gegeneinander drückt, und wobei eines der beiden Lagerteile am Spiegelgehäuse und das andere Lagerteil am Spiegelfuss befestigt ist, und das erste Lagerteil ein unregelmässiges Profil aufweist, welches eine Vorzugsstellung des Spiegelgehäuses relativ zum Spiegelfuss bestimmt.

Die deutsche Gebrauchsmusterschrift DE-U 7 835 006 zeigt einen Aussenspiegel solcher Art, bei dem die beiden Lagerteile von einem Rohrniet als Verbindungsteil zusammengehalten sind, wobei zwischen dem am Spiegelfuss befestigten Lagerteil und einem radial umgebördelten Ende des Rohrniets eine Druckfeder eingespannt ist. Diese Druckfeder drückt die beiden Lagerteile mit ihren aufeinander zuweisenden Flächen gegeneinander. Die beiden aufeinander zuweisenden Flächen der beiden Lagerteile weisen eine Erhebung bzw. Vertiefung auf, so dass die bevorzugte Schwenk-Stellung des Spiegelgehäuses relativ zum Spiegelfuss dann vom Spiegelgehäuse eingenommen wird, wenn die Erhebung von der Einsenkung eingefangen ist. Diese Stellung des Spiegelgehäuses ist die Normalstellung, bei der der im Spiegelgehäuse angeordnete Rückspiegel dem Fahrer den Blick hinter das Fahrzeug freigibt. Aus dieser Normalstellung kann das Spiegelgehäuse durch Krafteinwirkung von vorne oder hinten relativ zu dem mit dem Kraftfahrzeug fest verbundenen Spiegelfuss an die Karosserie des Fahrzeugs geschwenkt werden, wobei die Erhebung aus der Einsenkung gegen die Kraft der Druckfeder freikommt. Diese Art der Befestigung des Spiegelgehäuses am Spiegelfuss hat sich zwar bewährt; jedoch werden bei einigen Fahrzeugtypen und bei besonderen Betriebsbedingungen des Fahrzeugs von der Karosserie des Fahrzeugs ausgehende Vibrationen auf das Spiegelgehäuse übertragen, die von diesem an den Rückspiegel weitergeleitet werden, wenn nicht besondere Massnahmen zur vibrationsmässigen Entkopplung zwischen Spiegelgehäuse und Rückspiegel getroffen werden. Diese Vibrationsübertragung kann zwar durch besonders harte Auslegung der Druckfeder stark unterdrückt werden, die dann die Erhebung in die Einsenkung presst. In diesem Fall sind dann jedoch erheblich Kräfte erforderlich, um das Spiegelgehäuse gegen die Karosserie aus der Normalstellung herauszuklappen.

Aus dem Dokument GB-A 2 041 857 ist ein Aussenspiegel für ein Fahrzeug bekannt, bei dem das Spiegelgehäuse über einen seitlich auskragenden und zwei übereinander angeordnete Streben aufweisenden Arm an einem am Fahrzeug zu befestigenden Spiegelfuss angelenkt ist. Dabei umfassen die spiegelfusseitigen Enden der beiden Streben einen seitlich vorstehenden Ansatz des Spiegelfusses zur Bildung zweier Lagerstellen, die von einem gemeinsamen Anker durchdrungen sind. Zwischen den beiden Lagerstellen ist ein radial wirkender Rastmechanismus eingebaut, der Vorzugstellungen des Armes und damit des Spiegelgehäuses in einer quer zum Anker sich erstreckenden Ebene bezüglich des Spiegelfusses definiert. Hierfür ist es jedoch erforderlich, dass der Arm den Ansatz des Spiegelfusses seitlich soweit umfasst, dass ausreichend Einbauraum für den Rastmechanismus zur Verfügung steht.

Demgegenüber liegt der Erfindung die Aufgabe zugrunde, die aus dem Dokument DE-U 7 835 006 bekannte Befestung des Spiegelgehäuses am Spiegelfuss (bzw. den Rastmechanismus) zu verbessern, um die obengenannten Nachteile des bekannten Aussenspiegels zu beseitigen.

Dazu ist bei dem eingangs genannten Aussenspiegel erfindungsgemäss vorgesehen, dass das erste Lagerteil und das zweite Lagerteil mit je einer ebenen Ringfläche gegeneinander anliegen und dass das unregelmässige Profil radial innerhalb der Ringfläche des ersten Lagerteils an einem abgesetzten Umfangsabschnitt desselben ausgebildet ist, gegen welchen eine radial elastische Raste im zweiten Lagerteil gehalten ist.

Durch die funktionsmässige Trennung zwischen der Herstellung eines festen Sitzes des Spiegelgehäuses auf dem Spiegelfuss und der Schwenkbarkeit des Spiegelgehäuses aus der Normalstellung heraus braucht die Druckfeder nicht mehr für den Aushebeweg der Erhebung aus der Einsenkung ausgelegt zu werden, so dass hierfür eine einfache Tellerfeder genügt. Die Raste kann eine einfache Blattfeder, ein federbelasteter Stift oder dergleichen sein, die am Umfang des Profils anliegt und durch Eingriff in dessen Unregelmässigkeit die Normalstellung des Spiegelgehäuses definiert.

Zweckmässige Ausführungsformen der Erfindung sind in den Unteransprüchen angegeben.

Die Erfindung wird nachstehend anhand der in der beigefügten Zeichnung dargestellten Ausführungsbeispiele im einzelnen beschrieben. Es zeigen:

Fig. 1 eine schematische Ansicht eines teilweise geschnittenen Aussenspiegels;

Fig. 2 eine Ansicht des Spiegelgehäuse-Lagerteiles aus Fig. 1 von unten;

Fig. 3 eine Ansicht des Spiegelfuss-Lagerteiles gemäss Fig. 1 von oben;

Fig. 4–6 eine der Fig. 3 ähnliche Draufsicht auf ein Spiegelfuss-Lagerteil gemäss der zweiten bis vierten Ausführungsform der Erfindung;

Fig. 7–9 eine der Fig. 1 ähnliche Ausschnitts-Schnittansicht der Befestigungsvorrichtung des Spiegelgehäuses am Spiegelfuss gemäss der zweiten bis vierten Ausführungsform der Erfindung; und

Fig. 10–12 Ansichten des Spiegelgehäuse-

Lagerteiles gemäss den Ausführungsformen zwei bis vier der Erfindung.

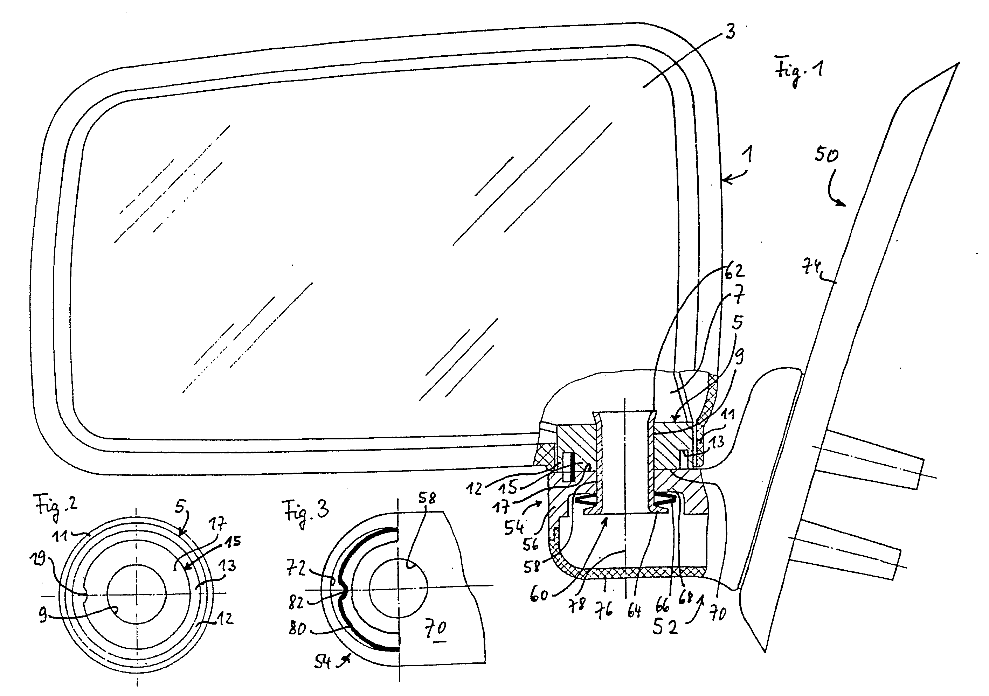

Gemäss Fig. 1 besteht der Aussenspiegel aus einem an einem nicht dargestellten Fahrzeug befestigbaren Spiegelfuss 50 und einen an diesem befestigten Spiegelgehäuse 1, welches einen Rückspiegel 3 umschliesst. An dem unteren seitlichen Ende ist das aus Kunststoff bestehende Spiegelgehäuse 1 zu einem Ringflansch 11 ausgebildet, in welchen sich ein erstes Lagerteil 5 nach aussen mit dem Ringflansch 11 bündig abschliessend erstreckt. Das erste Lagerteil 5 ist integraler Bestandteil einer Halteplatte 7, an deren nicht dargestelltem, sich hinter dem Rückspiegel 3 ersteckendem Boden das Spiegelgehäuse 1 befestigt ist. Auf der Halteplatte 7 sind nicht dargestellte Vorrichtungen montiert, die den Rückspiegel 3 tragen und dessen Verstellbarkeit ermöglichen.

Der Spiegelfuss 50 ist mit einem nach aussen abstehenden Ansatz 52 versehen, dessen Sitz 54, der bei an eine Fahrzeugkarosserie anmontiertem Spiegelfuss 50 sich im wesentlichen horizontal erstreckt, über das erste Lagerteil 5 das Spiegelgehäuse 1 sowie den Rückspiegel 3 trägt. Dazu ist der Sitz 54 als ein zweites Lagerteil 56 ausgebildet, dessen Durchgangsbohrung 58 mit einer Durchgangsbohrung 9 im ersten Lagerteil 5 fluchtet, wobei die gemeinsame Achse der beiden Bohrungen 9 und 58 bei anmontiertem Spiegelfuss 50 im wesentlichen vertikal ist. Durch die Durchgangsbohrungen 9 und 58 erstreckt sich ein Hohlniet 60, der das erste Lagerteil 5 mittels seines radial nach aussen umgebördelten Randes 62 hintergreift und dessen sich unter das zweite Lagerteil 56 erstreckende, ebenfalls umgebördelter Rand 64 eine beispielsweise aus zwei Tellerfedern bestehende und sich an der rückwärtigen Fläche 68 des zweiten Lagerteils 56 abstützende Druckfeder 66 hält. Auf diese Weise wird durch die Druckfeder 66 das erste Lagerteil 5 und das mit diesem befestigte Spiegelgehäuse 1 am zweiten Lagerteil 56 unter Druck und um die Achse des Hohlniets 60 drehbar festgehalten DE-U 7 835 006). An dem massiven, zylindrischen ersten Lagerteil 5 sind an der vom Spiegelgehäuse 1 nach aussen weisenden Seite zunächst ein die Bohrung 9 umgebender Lagerring 15 mit ebener Stirn-Ringfläche 17 ausgebildet. Zwischen dem Lagerring 15 und einem diesen umgebenden äusseren Kranz 12 ist eine Ringnut 13 ausgebildet, die, wie besonders gut aus Fig. 2 zu erkennen ist, durch eine Einsenkung 19 in der Aussenperipherie des Lagerrings 15 erweitert ist. Der Kranz 12 schliesst in gleicher Ebene mit der Ringfläche 17 ab.

Das zweite Lagerteil 56 des Spiegelfusses 50 besitzt eine die Bohrung 58 umgebende plane Lagerfläche 70, in die eine Halbringnut 72 in Ausrichtung auf die Ringnut 13 eingelassen ist. In der Halbringnut 72 ist eine sichelförmig gebogene Blattfeder 80 gehalten, die höchstens um die Tiefe der Ringnut 13 über die Lagerfläche 70 nach oben vorsteht. Die Blattfeder 80 ist mit einer radial einwärts gerichteten Rippe 82 versehen, die dazu bestimmt ist, bei an den Spiegelfuss 50 anmontiertem Spiegelgehäuse 1 in die Einsenkung 19 des Lagerrings eingreifen zu können.

Das zweite Lagerteil 56 kann an der Montageplatte 74 des Spiegelfusses in nicht dargestellter Weise befestigt sein, und die Unterseite des zweiten Lagerteils 56 ist mit einer Kunststoffkappe 76 nach unten verschlossen.

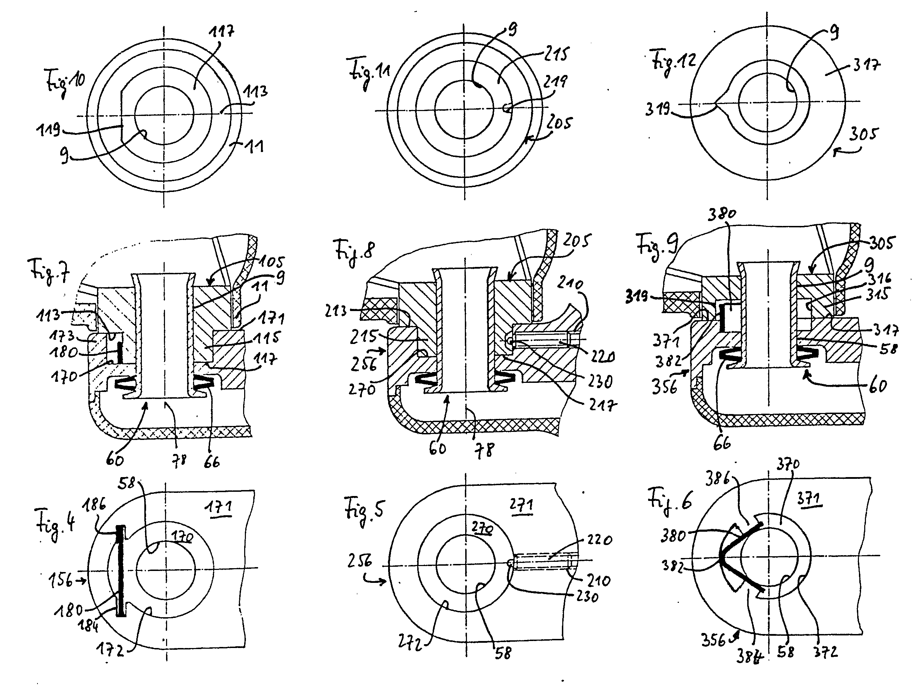

Bei der Montage des Aussenspiegels wird vor dem Aufsetzen der Halteplatte 7 mit angeformten ersten Lagerteil 5 die Blattfeder 80 in die Halbringnut 72 eingesetzt (Fig. 3) und danach das erste Lagerteil 5 so über die Bohrung 58 gesetzt, dass der über die Fläche 70 vorstehende Teil der Feder 80 sich in die Ringnut 13 erstreckt. Sodann wird der Hohlniet 50 durch die Bohrungen 58 und 9 nach Zwischenlegen der Feder 66 hindurchgeschoben und sein oberer Rand 62 radial nach aussen umgebördelt. Sodann werden die übrigen Teile des Spiegels an der Halteplatte 7 befestigt.

Das Spiegelgehäuse 1 ist gemäss Fig. 1 auf diese Weise um die Achse 78 des Hohlniet 60 auf die Montageplatte 74 des Spiegelfusses zu oder von ihr weg schwenkbar. Während dieser Schwenkbewegung reitet die Kuppe der Rippe 82 auf der Aussenperipherie des Lagerrings 15, wobei die Feder 80 aus der in Fig. 3 dargestellten Lage gegen die äussere Innenfläche der Nut 72 gedrückt wird. Wenn die Rippe 82 in die Einsenkung 19 einfällt, wird das Spiegelgehäuse 1 in dieser Stellung fixiert, da zum Wegschenken aus dieser Normalstellung die Kraft der Feder 80 überwunden werden muss. Diese Normalstellung entspricht der für die Fahrerposition im Kraftfahrzeug günstigsten Winkelstellung des Spiegelgehäuses 1. Die Druckfeder 66 ist so bemessen, dass das erste Lagerteil 5 mit relativ hohem Druck gegen das zweite Lagerteil 56 angepresst wird, wobei die ebene Lagerfläche 70 gegen die ebene Ringfläche 17 und die Stirnfläche des Kranzes 12 anliegt. Beim Verschwenken des Spiegelgehäuses aus der Normalstellung braucht im Gegensatz zu bekannten Ausführungsformen keine Aushebekraft für einen in axialer Richtung wirkenden Vorsprung aus der Fläche 70 überwunden zu werden. Die vorstehend beschriebene Lagerung ergibt daher einen guten und stets genauen Sitz des Spiegelgehäuses 1 auf dem Spiegelfuss 50.

Bei der in den Figuren 4, 7, 10 dargestellten zweiten Ausführungsform der Erfindung ist die halbkreisförmige Blattfeder 80 durch eine gerade Blattfeder 180 ersetzt, die in gegenüberliegenden Taschen 184, 186 des zweiten Lagerteils 156 ausserhalb der Bohrung 58 gehalten ist. Die Nut 72 aus dem ersten Ausführungsbeispiel hat hier die Form einer die Bohrung 58 umgebenden, im Querschnitt rechtwinkligen Vertiefung 172 mit ebenem Boden 170, welche auf der der Bohrung 58 gegenüberliegenden Seite der Blattfeder 180 nach aussen kreisbogenförmig erweitert ist (Fig. 4). Gemäss Fig. 7 ist am ersten Lagerteil 105 der äussere Kranz 12 weggelassen, so dass der Lagerring 115 mit einem stufenförmigen Absatz mit ebener Basisfläche 113 aus dem ersten Lagerteil 105 vorsteht. Die Stirnfläche 117 des Lagerrings 115 ist ringförmig und sitzt auf der Bodenfläche 170 der Einsenkung 172 auf. Entsprechend ruht die Basisfläche 113 auf der Oberfläche 171 des zweiten Lagerteils 156.

An einem Abschnitt seines kreisförmigen Umfangs ist der Lagerring 117 bei 119 abgeflacht. Die Abflachung 119 entspricht in ihrer Funktion der Einsenkung 19 am ersten Ausführungsbeispiel der Erfindung. Die Abflachung 119 und die Lage der Blattfeder 180 sind so aufeinander abgestimmt, dass die Normalstellung des Spiegelgehäuses 1 bei flächiger Anlage der Blattfeder 180 an die Abflachung 119 gegeben ist. Wenn das Spiegelgehäuse um die Achse 78 des Hohlniets 60 verschwenkt wird, wird die Blattfeder 180 durch den verstärkten Umfang des Lagerrings 117 in die kreisbogenförmige Erweiterung der Einsenkung 172 herausgedrückt. Die dazu erforderliche Kraft entspricht der Sollkraft, bei der das Spiegelgehäuse 1 aus seiner Normalstellung gegen das Fahrzeug verschwenkbar sein soll.

Bei der in den Figuren 5, 8, 11 dargestellten dritten Ausführungsform ist die Feder 80, 180 ersetzt durch einen Stift 220, der in eine Gewindebohrung 210 eingeschraubt ist, welche quer zur Achse 78 des Hohlniets 60 seitlich in das Fleisch des zweiten Lagerteils 256 eingedreht ist. Der Stift 220 enthält in seinem Inneren eine nicht dargestellte Feder, die einen Dorn 230 aus dem Inneren des Stiftes 220 nach aussen in Richtung auf die Achse 78 vortreibt. In der Aussenperipherie des Lagerrings 215 des ersten Lagerteils 205 ist eine Einsenkung 219 ausgebildet, in welche der Dorn 230 bei Drehung des ersten Lagerteils 205 und damit des Spiegelgehäuses 1 um die Achse 78 einfallen kann. Durch das Einfangen des Dornes 230 in der Einsenkung 219 ist dann wie bei den vorher beschriebenen Ausführungsformen die Normalstellung des Spiegelgehäuses 1 gegenüber dem Spiegelfuss definiert. Im übrigen sitzt der Lagerring 215 mit seiner den Hohlniet 60 umgebenden Ringfläche 217 auf der entsprechenden gegenüberliegenden Ringfläche 270 des zweiten Lagerteils 256 auf. Wie dargestellt (Figuren 5, 8) steht der Dorn 230 aus der den Umfang des Lagerrings 215 umfassenden Seitenfläche der Einsenkung 272 im zweiten Lagerteil 256 nach Innen vor. Auf dem die Einsenkung 272 umgebenden ringförmigen Bereich der Oberfläche 271 des zweiten Lagerteils 256 sitzt die Basisfläche 213 des ersten Lagerteils 205 auf, welche sich von der Mantelfläche des Lagerrings 215 radial nach aussen am ersten Lagerteil 205 erstreckt.

Bei der in den Figuren 6, 9, 12 dargestellten vierten Ausführungsform ist die Feder 80 und die Blattfeder 180 durch eine winkelförmig gebogene Feder 380 ersetzt, deren Schenkel gegen Pfosten 384, 386 anliegen, welche aus der Umfangsfläche der die Bohrung 58 des zweiten Lagerteils 356 umgebenden Einsenkung 372 nach innen vorstehen. Die Pfosten 384, 386 stehen nach innen soweit vor, dass die anliegenden Federschenkel die Öffnung der Bohrung 58 nicht beschränken. Die die Schenkel der Feder 380 verbindende Rundung 382 liegt gegen eine Innenfläche einer radialen Erweiterung der Einsenkung 372 an.

Das erste Lagerteil 305 weist einen Lagerring 315 auf, der vom Hohlniet 60 radialen Abstand hält. Dadurch ergibt sich in dem ersten Lagerteil 305 eine Einsenkung 316, die mit der Einsenkung 372 im zweiten Lagerteil 356 fluchtet bzw. diese samt ihrer die Federkrümmung 382 enthaltenden Erweiterung überdeckt. Die Feder 380 erstreckt sich über die obere Lagerfläche 371 des zweiten Lagerteils 356 hinaus in die Einsenkung 316 im ersten Lagerteil 305 hinein. Wie Fig. 12 zeigt, ist in der Peripherie der Einsenkung 316 eine Erweiterung 319 vorgesehen, die dazu bestimmt ist, dass die Biegung der Feder 382 von ihr eingefangen werden kann. Dadurch ist wie bei den vorgehenden Ausführungsformen der Erfindung die Normalstellung des Spiegelgehäuses relativ zum Spiegelfuss definiert. Wenn das Spiegelgehäuse aus dieser Normalstellung bei dieser Ausführungsform der Erfindung zur Seite gedreht wird, wird die Feder 380 auf die Achse 78 zu einwärts geschoben, so dass die Krümmung 382 der Feder 380 auf der kreisförmigen Innenperipherie der Einsenkung 316 reitet. Das Spiegelgehäuse ist dann leicht zur Seite schwenkbar. In allen Winkelstellungen des Spiegelgehäuses relativ zum Spiegelfuss gleitet die Lagerfläche 317 des Lagerrings 315 auf der ebenen Lagerfläche 371 des zweiten Lagerteils 356 und wird auf dieser wie bei den vorher beschriebenen Ausführungsbeispielen, mittels der Druckfeder 66 und des Lagerdorns 60 mit Druck in Anlage gehalten.

Die Erfindung ist auf Einzelheiten des dargestellten Ausführungsbeispiel nicht beschränkt.

## Patentansprüche

1. Aussenspiegel für Kraftfahrzeuge mit einem an einem Spiegelfuss (50) schwenkbar befestigten Spiegelgehäuse (1), mit zwei flächig aufeinander liegenden, mit fluchtenden Durchgangsbohrungen versehenen Lagerteilen (5, 105, 205, 305; 56, 156, 256, 356), wobei sich durch die Durchgangsbohrungen (9; 58) ein axial federbelastetes Verbindungsteil (60) erstreckt, welches die Lagerteile gegeneinander drückt, und wobei eines der beiden Lagerteile am Spiegelgehäuse (1) und das andere Lagerteil an dem Spiegelfuss (50) befestigt ist und das erste Lagerteil ein unregelmässiges Profil (19, 119, 219, 319) aufweist, welches eine Vorzugsstellung des Spiegelgehäuse (1) relativ zum Spiegelfuss (50) bestimmt, dadurch gekennzeichnet, dass das erste Lagerteil (5, 105, 205, 305) und das zweite Lagerteil (56, 156, 256, 356) mit je einer ebenen Ringfläche (12, 17; 113, 171; 213, 271; 317, 371) gegeneinander anliegen und dass das unregelmässige Profil (19, 119, 219, 319) radial innerhalb der Ringfläche (12; 113; 213; 317) des ersten Lagerteils an einem abgesetzten Umfangsabschnitt (15, 115, 215, 315) desselben ausgebildet ist, gegen welchen eine radial elastische Raste (80, 180, 230, 380) im zweiten Lagerteil gehalten ist.

2. Spiegel nach Anspruch 1, dadurch gekennzeichnet, dass radial innerhalb der Ringfläche (17; 171; 272; 371) des zweiten Lagerteils eine axiale Einsenkung (72; 184, 186, 370) ausgebildet ist, in welcher die Raste (80, 180, 380) gehalten ist.

3. Spiegel nach Anspruch 1 oder 2, dadurch gekennzeichnet, dass radial innerhalb der Ringfläche des ersten Lagerteils eine Ringnut (13, 316) ausgebildet ist, deren Flanke mit dem Profil (19, 319) versehen ist, wobei die Raste (80, 380) sich axial in die Ringnut erstreckt.

4. Spiegel nach einem der vorstehenden Ansprüche, dadurch gekennzeichnet, dass das erste Lagerteil innerhalb seiner Ringfläche (113, 213) einen sich axial in das zweite Lagerteil erstreckenden ringförmigen Absatz (115, 215) aufweist, an dessen Umfangsfläche das Profil (119, 219) ausgebildet ist.

5. Spiegel nach einem der vorstehenden Ansprüche, dadurch gekennzeichnet, dass die Raste eine Blattfeder (80, 180, 380) ist.

6. Spiegel nach Anspruch 5, dadurch gekennzeichnet, dass die Blattfeder in Umfangsrichtung gebogen ist.

7. Spiegel nach Anspruch 6, dadurch gekennzeichnet, dass die Blattfeder (80, 380) eine radial vorstehende Nase (82, 382) aufweist und in einer Ringnut (72, 372) des zweiten Lagerteils gehalten ist.

8. Spiegel nach Anspruch 4, dadurch gekennzeichnet, dass die Raste ein radial federbelasteter Dorn (230) ist, welcher in eine Einsenkung (272) im zweiten Lagerteil radial vorsteht.

9. Spiegel nach einem der vorstehenden Ansprüche, dadurch gekennzeichnet, dass das erste Lagerteil am Spiegelgehäuse (1) und das zweite Lagerteil am Spiegelfuss (50) befestigt ist.

10. Spiegel nach einem der vorstehenden Ansprüche, dadurch gekennzeichnet, dass das erste Lagerteil integraler Teil einer Halteplatte (7) ist, die am inneren Boden des Spiegelgehäuses (1) befestigt ist und den Rückspiegel (3) samt dessen Verstellmechanismus trägt.

**Claims**

1. Exterior mirror for motor vehicles, comprising a mirror housing (1) which is pivotally secured to a mirror base (50), two mounting members (5, 105, 205, 305; 56, 156, 256, 356) which lie in surface contact with each other and which are provided with aligned through bores, wherein extending through the through bores (9; 58) is an axially spring-loaded connecting member (60) which presses the mounting members towards each other, and wherein one of the two mounting members is fixed to the mirror housing (1) and the other mounting member is fixed to the mirror base (50) and the first mounting member is of an irregular profile (19, 119, 219, 319) which defines a preferred position of the mirror housing (1) relative to the mirror base (50) characterised in that the first mounting member (5, 105, 205, 305) and the second mounting member (56, 156, 256, 356) bear against each other with respective flat annular surfaces (12, 17; 113, 171; 213, 271; 317, 371) and that the irregular profile (19, 119, 219, 319) is formed radially inwardly of the annular surface (12; 113; 213; 317) of the first mounting member on a reduced peripheral portion (15, 115, 215, 315) thereof, against which a radially elastic retaining member (80, 180, 230, 380) in the second mounting member is held.

2. A mirror according to claim 1 characterised in that an axial recess (72; 184, 186, 370) in which the retaining member (80, 180, 380) is held is disposed radially inwardly of the annular surface (17; 171; 272; 371) of the second mounting member.

3. A mirror according to claim 1 or claim 2 characterised in that provided radially inwardly of the annular surface of the first mounting member is an annular groove (13, 316) whose side is provided with the profile (19, 319), the retaining member (80, 380) extending axially into the annular groove.

4. A mirror according to one of the preceding claims characterised in that the first mounting member, within its annular surface (113, 213), has an annular reduced portion (115, 215) which extends axially into the second mounting member and at the peripheral surface of which is disposed the profile (199, 219).

5. A mirror according to one of the preceding claims characterised in that the retaining member is a leaf spring (80, 180, 380).

6. A mirror according to claim 5 characterised in that the leaf spring is bent in the peripheral direction.

7. A mirror according to claim 6 characterised in that the leaf spring (80, 380) has a radially projecting projection (82, 382) and is held in an annular groove (72, 372) in the second mounting member.

8. A mirror according to claim 4 characterised in that the retaining member is a radially spring-loaded mandrel (230) which projects radially into a recess (272) in the second mounting member.

9. A mirror according to one of the preceding claims characterised in that the first mounting member is fixed to the mirror housing (1) and the second mounting member is fixed to the mirror base (50).

10. A mirror according to one of the preceding claims characterised in that the first mounting member is an integral part of a holding plate (7) which is fixed to the inside of the bottom of the mirror housing (17) and carries the rear view mirror (3) together with the adjusting mechanism thereof.

**Revendications**

1. Rétroviseur pour véhicules automobiles, avec un corps de rétroviseur (1) fixé de manière pivotante sur un pied de rétroviseur (50), avec deux pièces de support (5, 105, 205, 305; 56, 156, 256, 356) disposées à plat l'une sur l'autre et munies de trous débouchants coïncidents, à travers les trous débouchants (9; 58) s'étendant une pièce de liaison (60) sollicitée élastiquement dans le sens axial, qui pousse les pièces de support l'une contre l'autre, et l'une des deux pièces de support étant fixée sur le corps de rétroviseur (1) et l'autre pièce de support sur le pied de rétroviseur (50) et la première pièce de support présentant un profil irrégulier (19, 119, 219, 319) qui détermine une position préférentielle du corps de rétroviseur (1) par rapport au pied de rétroviseur (50), caractérisé en ce que la première pièce de support (5, 105, 205, 305) et la deuxième pièce de support (56, 156, 256, 356) sont appliquées l'une contre l'autre avec chacune une face annulaire plane (12, 17; 113, 171; 213, 271; 317, 371), et en ce que le profil irrégulier (19, 119, 219, 319) est réalisé radialement à l'intérieur de la face annulaire (12; 113; 213; 317) de la première pièce de support sur une portion circonférentielle étagée (15, 115, 215, 315) de cette dernière, contre laquelle est maintenu un clips élastique radial (80, 180, 230, 380) de la deuxième pièce de support.

2. Rétroviseur conforme à la revendication 1, caractérisé en ce que, radialement à l'intérieur de la face annulaire (17; 171; 272; 371) de la deuxième pièce de support, est réalisé un renfoncement axial (72; 184, 186, 370) dans lequel est maintenu le clips (80, 180, 380).

3. Rétroviseur conforme à la revendication 1 ou 2, caractérisé en ce que, radialement à l'intérieur de la face annulaire de la première pièce de support, est réalisée une gorge annulaire (13, 316) dont le flanc est pourvu du profil (19, 319) le clips (80, 380) s'étendant axialement dans la gorge annulaire.

4. Rétroviseur conforme à l'une des revendications précédentes, caractérisé en ce que la première pièce de support comporte, à l'intérieur de sa face annulaire (113, 213) un étage (115, 215) sur la surface circonférentielle duquel est réalisé le profil (119, 219).

5. Rétroviseur conforme à l'une des revendications précédentes, caractérisé en ce que le clips est un ressort à lame (80, 180, 380).

6. Rétroviseur conforme à la revendication 5, caractérisé en ce que le ressort à lame est plié dans le sens circonférentiel.

7. Rétroviseur conforme à la revendication 6, caractérisé en ce que le ressort à lame (80, 380) comporte une nervure faisant saillie radialement (82, 382) et est maintenu dans une gorge annulaire (72, 372) de la deuxième pièce de support.

8. Rétroviseur conforme à la revendication 4, caractérisé en ce que le clips est une cheville sollicitée élastiquement radialement (230) qui dépasse radialement dans un renfoncement (272) de la deuxième pièce de support.

9. Rétroviseur conforme à l'une des revendications précédentes, caractérisé en ce que la première pièce de support est fixée sur le corps de rétroviseur (1) et la deuxième pièce de support sur le pied de rétroviseur (50).

10. Rétroviseur conforme à l'une des revendications précédentes, caractérisé en ce que la première pièce de support fait partie intégrante d'un plateau de support (7) qui est fixé sur le fond intérieur du corps de rétroviseur (1) et supporte le rétroviseur (3) avec son mécanisme de réglage.

Fig. 1

Fig. 2

Fig. 3

0 173 113

Fig.10

117
113
119
9
11

Fig.11

9
215
219
205

Fig.12

9
317
319
305

Fig.7

105
9
11
171
115
117
113
173
180
170
60
78
66

Fig.8

205
210
213
215
256
270
220
230
217
60
78

Fig.9

380
305
9
316
315
319
371
382
356
317
58
60
66

Fig.4

58
186
171
170
156
180
184
172

Fig.5

271
270
220
256
210
230
272
58

Fig.6

386
370
371
380
382
356
384
58
372

0173113